# FASCICULE DE BREVET EUROPEEN

(11) **EP 0 658 655 B1**
(45) Date de publication et mention de la délivrance du brevet: **10.03.1999**
(21) Numéro de dépôt: 94870195.8
(22) Date de dépôt: 14.12.1994
(51) Int. Cl.: E01F 9/06, E01F 9/08, G02B 5/02

(54) **Dispositif lumineux**
Beleuchtungsanlage
Illuminated means

(30) Priorité: 15.12.1993 BE 9301388; 16.03.1994 BE 9400282
(43) Date de publication de la demande: 21.06.1995
(73) Titulaire: Niezen, Michel, B-7940 Brugelette (BE)
(72) Inventeur: Niezen, Michel, B-7940 Brugelette (BE)
(74) Mandataire: Plucker, Guy

(56) Documents cités:
- EP-A- 0 323 682
- EP-A- 0 562 702
- FR-A- 2 225 578
- GB-A- 2 128 664
- PATENT ABSTRACTS OF JAPAN vol. 018, no. 56 (M-1551) 28 Janvier 1994 & JP-A-05 280 014 (TSUSHIMA TOMOHIKO) 26 Octobre 1993
- DATABASE WPI Week 9205, Derwent Publications Ltd., London, GB; AN 92-038656 & JP-A-3 285 958 (DAINICHISEIKA) 17 Décembre 1991
- PATENT ABSTRACTS OF JAPAN vol. 16, no. 239 (M-1258) 2 Juin 1992 & JP-A-04 052 305 (RIYOUKOU SANGIYOU) 20 Février 1992

## Description

La présente invention concerne un dispositif lumineux et son utilisation notamment pour le marquage du sol et pour la réalisation de bordures de chaussée lumineuses.

Les dispositifs lumineux conventionnels, transformant de l'énergie en rayonnements lumineux, par exemple par effet joule ou par arc électrique, émettent également dans l'infrarouge, ce qui provoque une perte d'énergie, plus ou moins importante, sous forme de dégagement de calories.

De ce fait, il faut éviter de mettre des dispositifs lumineux conventionnels directement en contact avec des matériaux et on doit veiller tout particulièrement à la ventilation des alentours de ceux-ci.

Il est donc impossible de prévoir un dispositif lumineux, notamment pour le marquage du sol, résistant aux contraintes mécaniques tels que les chocs ou la pression d'un véhicule ou d'un passant, sans devoir prévoir un réceptacle élaboré. Ce réceptacle doit être une structure complexe alliant, par exemple, du métal et du verre armé calibré supportant la chaleur émise par le dispositif lumineux. De plus, il faut tenir compte des problèmes posés par les remontées d'humidité venant du sol.

De plus en plus, les bandes de circulation sont divisées par des îlots de séparation, les carrefours sont équipés de ronds-points.

Le soir, ces dispositifs ne sont pas toujours clairement perceptibles par les automobilistes. Soit ils heurtent les îlots de séparation, soit ils passent au travers des ronds-points. Il en résulte, parfois des accidents mortels.

Les solutions préconisées actuellement sont, par exemple, l'éclairage des îlots de séparation et des ronds-points, l'équipement des pointes d'îlots par des bornes lumineuses éclairées intérieurement ... etc.

L'emploi de l'éclairage public implique des investissements importants et les budgets ne sont plus toujours disponibles. Les bornes lumineuses classiques sont relativement peu coûteuses mais représentent un coût caché important car régulièrement accidentées.

L'usage des bordures lumineuses n'est pas neuf. L'emploi de bordures lumineuses permet, par exemple, de souligner un rond-point, un îlot de séparation, un trottoir ... d'un trait lumineux afin de les rendre mieux perceptibles aux usagers de la route.

Les bordures lumineuses déjà exploitées peuvent se ranger dans deux catégories.

La première concerne les bordures ceinturées extérieurement d'un dispositif lumineux. Il s'agit généralement d'un tube qui canalise un rayonnement lumineux ou qui contient une succession d'ampoules.

Le système contenant une succession d'ampoules a été abandonné car les conditions de remplacement des ampoules sont trop difficiles. Il faut pratiquer une découpe du tube pour accéder à l'ampoule défectueuse, puis remplacer soigneusement celle-ci, puis la remettre correctement dans le tube et enfin il faut recoller les lèvres ouvertes du tube pour éviter la pénétration de poussières et d'humidité.

L'usage du tube ne permet pas aux véhicules de rouler dessus sans l'écraser.

La seconde catégorie concerne les bordures comportant une cavité équipée d'une armature électrique dans laquelle une source lumineuse est installée. La face avant est fermée par une plaque transparente généralement en matière plastique jaune-orange. La demande de brevet français n°2.225.578 décrit de telles bordures.

L'usage de ce système n'a pas rencontré le succès escompté car les conditions d'entretien sont trop difficiles. Les bordures étant placées en des points où la circulation implique un danger, ce danger est aussi valable pour l'équipe de remplacement des lampes. Souvent le câblage, les éléments mécaniques sont corrodés sous l'effet des gaz d'échappement des véhicules, les coûts de réparation deviennent prohibitifs pour la valeur résiduelle du matériel. L'usage de balayeuses équipées de jets d'eau est prohibé pour éviter de noyer l'installation électrique.

La présence d'une armature électrique réduit les possibilités de placement. En effet, il faut empêcher que les véhicules roulent fréquemment sur ces bordures afin de réduire les risques d'endommagement.

On connaît des dispositifs lumineux utilisant des diodes électroluminescentes (DEL), aussi appelées LED (Light Emitting Diode). Les LED sont de petites ampoules qui contiennent un cristal complexe qui a la particularité, lorsqu'il est traversé par un courant électrique, d'émettre une lumière dans une gamme de longueurs d'ondes très précise.

A l'opposé des ampoules d'éclairage classique, la LED n'émet pas dans l'infrarouge et ne dissipe donc pratiquement aucune chaleur.

Une autre particularité des LED est qu'elles émettent de la lumière dans une direction bien déterminée. Le faisceau lumineux émis par la LED a un angle variant de 2 à 30 degrés environ. Il faut donc être en face de la LED pour percevoir la lumière qu'elle émet.

L'utilisation des LED est déjà largement répandue, par exemple, comme témoin lumineux dans des appareils électriques, les LED sont également utilisées actuellement pour des panneaux de signalisation routière.

La demande de brevet EP-A-O-323 682 décrit des unités de recouvrement de sol, modulables, comportant des diodes électroluminescentes. Les LED sont disposées dans un boîtier en forme de coupole.

La résistance de ce boîtier est assez limitée et ne peut supporter le poids d'un véhicule. Ces unités ne sont pas utilisables pour le marquage routier.

La demande de brevet GB-A-2 128 664 décrit un dispositif lumineux utilisable pour le marquage routier. Il comporte des éléments lumineux constitués d'une LED noyée dans un matériau composite transparent dont le coefficient de résistance à l'abrasion est comparable à celui du revêtement de la chaussée. Plusieurs éléments lumineux sont encastrés dans un bloc constitué d'un matériau composite de même coefficient de résistance à l'abrasion.

L'utilisation d'un matériau composite dont la transparence est suffisante pour ne pas atténuer trop fortement l'intensité lumineuse du rayonnement émis par les LED, rend ce dispositif très coûteux.

De plus, comme précisé plus haut, les LED émettent un faisceau lumineux sous un angle très limité. Celui-ci n'est donc visible que lorsque l'on se trouve à peu près en face du dispositif. Seule l'abrasion superficielle du matériau composite, par exemple pour le passage des véhicules, va permettre une certaine diffusion du rayonnement lumineux.

La présente invention a pour but de remédier aux inconvénients mentionnés ci-dessus.

En particulier, l'invention a pour but de fournir un dispositif lumineux dont le rayonnement est visible sous un large angle incident.

L'invention a pour objet un dispositif lumineux comportant au moins une diode électroluminescente (LED), noyée dans un matériau translucide solide. Ce matériau translucide comporte des particules aptes à diffracter la lumière et un élément de cohésion.

Le matériau translucide solide protège la LED de l'humidité et des contraintes mécaniques comme, par exemple, des chocs, du poids d'un passant ou d'un véhicule.

L'emploi des particules solides a notamment pour effet de renforcer la résistance mécanique du matériau translucide. De plus, l'utilisation d'un mélange d'un matériau translucide avec des particules peut rendre la surface du dispositif suivant l'invention non lisse et donc antidérapante. Ceci est particulièrement avantageux, lorsque le dispositif suivant l'invention est encastré dans le sol et utilisé pour une voie de circulation routière.

Dans une forme avantageuse de réalisation de l'invention, le dispositif lumineux comporte plusieurs diodes électroluminescentes interconnectées entre elles de telle sorte qu'elles puissent être reliées à un circuit d'alimentation. Bien entendu, le dispositif comporte des moyens de connexion à un circuit extérieur.

Avantageusement, l'élément de cohésion est une résine, par exemple de type à deux composants, telle une résine époxy. Les particules aptes à diffracter la lumière sont, de préférence, des billes de verre.

Le verre diffractant la lumière, l'emploi de ces billes de verre a pour effet d'élargir le champ de perception de la lumière émise par les LED. En effet, alors que l'angle du faisceau lumineux émis par une LED est d'environ 2 à 30°, l'angle émis avec le dispositif suivant l'invention, lorsqu'il est encastré, est proche de 180°. On obtient dès lors un dispositif lumineux dont toute la surface visible est lumineuse sous n'importe quel angle incident.

Si l'ensemble des faces du dispositif sont visibles, l'angle de perception de la lumière peut atteindre 360°.

Les particules aptes à diffracter la lumière ont des dimensions comprises entre 1 et 16 mm.

Avantageusement, les particules ont un diamètre proche de celui des LED. Ce diamètre peut être choisi, par exemple, dans une fourchette allant de 30 à 160 % des dimensions des diodes. Par dimensions des LED, il faut comprendre le diamètre de la partie cylindrique de l'ampoule de la LED.

Si les LED utilisées ont un diamètre de 3 mm, on choisira, de préférence, des particules dont le diamètre varie entre 1 et 5 mm et de manière encore préférée entre 2 et 4 mm. Pour des diodes de 5 mm, on choisira, de préférence, des particules dont le diamètre varie entre 2 et 8 mm et de manière encore préférée entre 3 et 7 mm. Pour des diodes de 10 mm de diamètre, on choisira, de préférence, des particules dont le diamètre varie entre 4 et 16 mm et de manière encore préférée entre 6 et 14 mm.

Le nombre et le calibrage des particules utilisées sont des facteurs importants. Plus les particules utilisées sont de petite dimension et en grand nombre, plus le matériau translucide pourrait être opaque mais plus la lumière émise par le dispositif deviendra uniforme. Pour compenser l'opacité du matériau translucide, il pourrait alors être indiqué d'augmenter la puissance des LED.

Par contre, l'emploi de particules solides de grande dimension favorise le passage de la lumière mais donne une moins grande uniformité lumineuse, chaque LED étant plus distinctement perceptible.

Il pourrait aussi être envisagé d'utiliser des LED dont la forme n'est pas cylindrique, telle des diodes de forme parallélipipédique, le choix des particules devant alors être adapté en conséquence.

Suivant un mode particulier de réalisation de l'invention, le matériau translucide comporte une matière colorante. Les LED n'émettant de la lumière que dans des gammes de longueurs d'ondes très précises, le choix de la couleur de la lumière émise est limité (jaune, orange, rouge, vert). L'emploi de matières colorantes dans le matériau translucide a l'avantage de fournir un choix de coloris de lumière plus étendu.

Dans une forme particulière de l'invention, le dispositif lumineux comporte un réceptacle solide, fermé sur une de ses faces par le matériau translucide, et un support percé de trous dans lesquels sont enchâssées la ou les diodes électroluminescentes.

Suivant une forme avantageuse, le dispositif lumineux est apte à être encastré dans une paroi, telle qu'un mur ou le sol, de manière telle qu'une des faces du matériau translucide affleure la paroi dans laquelle le dispositif est encastré.

Suivant une autre forme de réalisation de l'invention, le dispositif n'est pas complètement encastré. Dans ce cas, sa ou ses faces visibles n'affleurent pas la paroi dans laquelle il est partiellement encastré mais ressortent de celle-ci.

Dans un mode de réalisation avantageux, le dispositif lumineux comporte un circuit d'alimentation apte à être alimenté par une batterie.

La présente invention a également pour objet l'utilisation du dispositif lumineux tel que décrit ci-dessus pour le marquage du sol ou également pour le marquage des murs.

La présente invention a encore pour objet un élément de construction pour voie de circulation comportant un dispositif lumineux tel que décrit ci-dessus. De tels éléments de construction sont, par exemple, des éléments de bordure de chaussée, des éléments pour la construction d'îlots de séparation, de bermes centrales séparant les bandes de circulation, des plateaux ou ralentisseurs de vitesse.

Le dispositif suivant l'invention peut aussi être appliqué à des poteaux, comme des balisettes, bornes ou bollards.

Par bordures de chaussée on comprend des éléments qui séparent les bandes de circulation du reste de la voirie. Ce sont aussi, des éléments qui peuvent séparer des bandes de circulation entre elles. En règle générale, elles sont proches du niveau du sol. Toutefois, elles peuvent aussi être plus hautes afin de rendre difficile ou d'interdire leur franchissement. Ceci est notamment le cas des bordures de type "NEW-JERSEY" placées le long des routes et autoroutes en remplacement de glissières de sécurité métalliques.

Dans une forme avantageuse de réalisation, la surface lumineuse peut être recouverte d'une plaque transparente. La présence de la plaque réduit le risque d'incrustation des saletés dans la résine et facilite le nettoyage. Dans le cas où cette plaque transparente est lisse le risque d'encrassement de la surface est réduit, la qualité optique de la surface lumineuse est améliorée.

Avantageusement, la sortie du câblage électrique d'alimentation peut se faire dans une cavité façonnée lors de la coulée. Le câblage peut s'y loger de façon à éviter qu'il ne soit abîmé lors de l'empilage des bordures, lors du stockage et du transport.

Dans une autre forme avantageuse, un ou plusieurs autres câbles peuvent sortir de la bordure afin d'alimenter une ou plusieurs autres bordures.

Dans une forme avantageuse de réalisation, la sortie du câblage peut être remplacée par un ou plusieurs connecteurs de sorte qu'il n'y ait pas de gêne causée par la présence de câblage électrique qui pend à la bordure.

Dans une autre forme avantageuse de réalisation le ou les connecteurs peuvent être encastrés dans une cavité afin d'éviter que les éléments de construction qui se frottent ne les écrasent.

La pose des éléments est parfois difficile car la largeur disponible pour les encastrer dans le sol peut être étroite. Cette étroitesse peut être causée par un sol particulièrement dur à casser. La liaison des éléments entr'eux peut donc être pénible et causer des dommages au câblage électrique.

Une forme avantageuse de réalisation est la présence de rainures suffisamment larges pour permettre d'y loger le câblage électrique.

Les câbles ont, suivant une forme avantageuse de réalisation, une longueur telle qu'ils sont aptes à être logés dans les rainures sans dépasser l'encombrement de la bordure et aptes à être reliés aux éléments de construction voisins.

Le rainurage et la cavité contenant la connexion peuvent être fermés par une plaque.

Avantageusement, l'électronique qui commande les LED est noyée dans les éléments - soit dans la masse de l'élément, soit dans le dispositif lumineux - de sorte qu'il suffit d'alimenter l'élément de construction en électricité pour que le dispositif lumineux s'illumine.

Dans un mode de réalisation avantageux, l'électronique est calibrée pour que l'alimentation se fasse directement selon la tension et la fréquence disponible du réseau. De ce fait, l'alimentation de l'élément suivant l'invention peut se faire directement au départ d'une borne d'alimentation électrique sans qu'il soit nécessaire d'utiliser une interface modifiant l'alimentation, par exemple, en réduisant la tension électrique.

Dans un mode de réalisation avantageux, l'élément suivant l'invention peut être équipé de crochets permettant de le déplacer facilement au moyen d'un engin de levage.

Dans une forme avantageuse de réalisation, une ou plusieurs cavités peuvent être réalisées afin d'alléger le poids de l'élément de construction.

Des exemples particuliers de réalisation de l'invention sont décrits ci-après, référence étant faite aux dessins annexés dans lesquels :

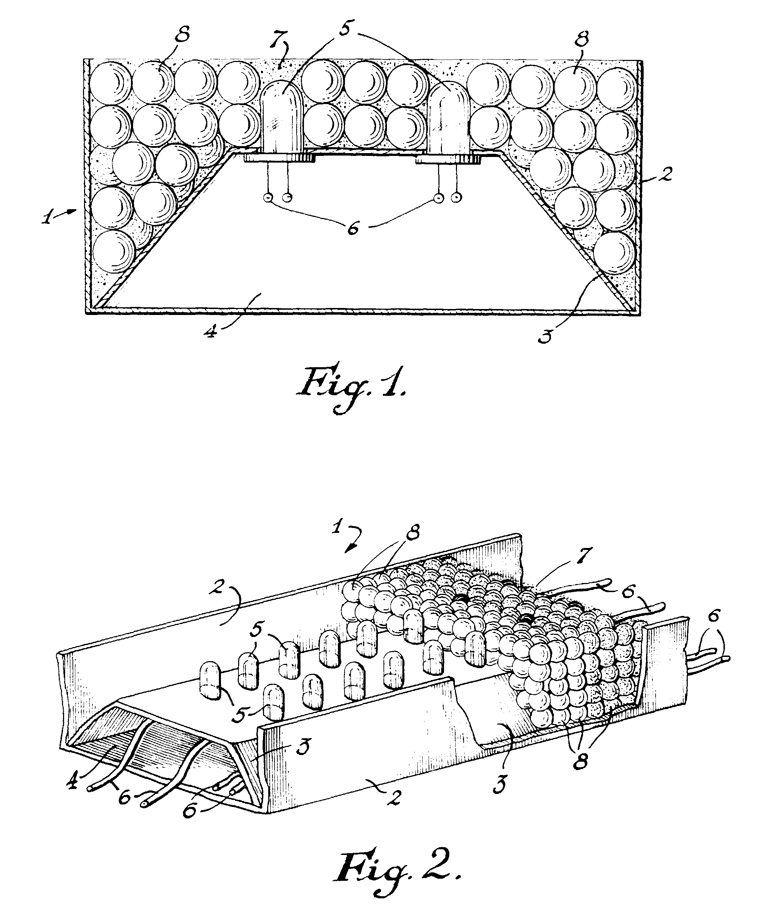

la figure 1 est une vue en coupe d'un dispositif lumineux suivant l'invention.

la figure 2 est une vue en perspective du même dispositif.

la figure 3 illustre l'utilisation d'un dispositif lumineux suivant la figure 1 comme séparateur d'emplacement de parking.

la figure 4 est une vue en perspective avec arrachement d'une bordure suivant l'invention.

la figure 5 est une vue en perspective avec arrachement partiel de la même bordure mais vue de dos.

la figure 6 représente un mode de raccordement électrique.

Le dispositif lumineux 1 comporte un profilé métallique 2 en forme de U, fermé de part et d'autre à ses deux extrémités, une tôle en aluminium 3 en forme de profilé en C est placée dans le profilé métallique 2 de telle sorte qu'un espace 4 est ménagé entre la tôle 3 et la base du profilé métallique 2. La tôle d'aluminium 3 est percée d'une série de petits trous dans lesquels sont enchâssés des LED 5. Les LED 5 sont connectées entre elles via leurs fils de contact métalliques 6, de sorte que le courant électrique puisse passer d'une LED 5 à l'autre. Les fils métalliques 6 sont situés dans la zone 4 ménagée entre la tôle 3 et le fond du profilé métallique 2.

Le reste du profilé 2 est rempli d'un mélange comportant une résine 7 translucide et des billes de verre 8, la partie supérieure des LED 5 étant noyée dans ce mélange. Les billes de verre ont, de préférence, un diamètre sensiblement égale à celui des LED 5, soit environ 5 mm.

La préparation d'un dispositif 1 suivant l'invention nécessite les étapes suivantes :
- percer dans une tôle d'aluminium 3 allongée dont les bords longitudinaux sont repliés vers le bas, des trous de même diamètre que celui des LED 5, à des distances déterminées. Ces distances sont fonction de la puissance des LED 5 utilisées, de la densité et de la dimension des particules ajoutées. Bien entendu, la tôle d'aluminium 3 peut être remplacée par tout support approprié.
- enchâsser les LED 5 dans les trous de la tôle 3.
- interconnecter les fils de contact 6 des LED 5 de manière à pouvoir les relier à un circuit d'alimentation commun. Il va de soi que ces connexions peuvent être réalisées par un circuit imprimé de dimensions appropriées.
- placer la tôle 3 dans un profilé métallique 2 en forme de U.
- fermer le profilé 2 à ses deux extrémités.
- mélanger les deux composants d'une résine 7 de manière à obtenir une masse fluide, par exemple 75% du produit de marque Eurodur® avec 25% du produit de marque Europox®.
- ajouter au mélange des billes de verre 8 dans une proportion d'environ 70% du volume total, de telle sorte que les billes de verre se touchent et que la résine remplisse tous les interstices entre les billes.
- ajouter éventuellement au mélange une matière colorante ou phosphorescente.
- homogénéiser.
- verser le mélange dans le profilé 2.
- après durcissement, le profilé 2, peut éventuellement être retiré.

On obtient ainsi une barre très solide que l'on peut cimenter dans le sol, dans un mur ou dans une bordure de chaussée, par exemple, afin d'obtenir un marquage lumineux.

Pour améliorer encore la tenue du dispositif aux conditions extérieures (et notamment à l'humidité), l'espace 4 peut, lui aussi, être rempli avec de la résine, les connexions étant ainsi isolées et soustraites à tout contact avec l'atmosphère ambiante.

On peut utiliser pour remplir l'espace 4 un matériau de moindre qualité étant donné qu'il ne doit pas présenter de qualité optique particulière. La tôle 3 permet de dissiper la faible quantité d'énergie des LED produite par effet Joule dans le circuit d'alimentation.

Suivant des variantes d'exécution, les LED peuvent être utilisées sans tôle 3 et peuvent être disposées suivant des orientations variables.

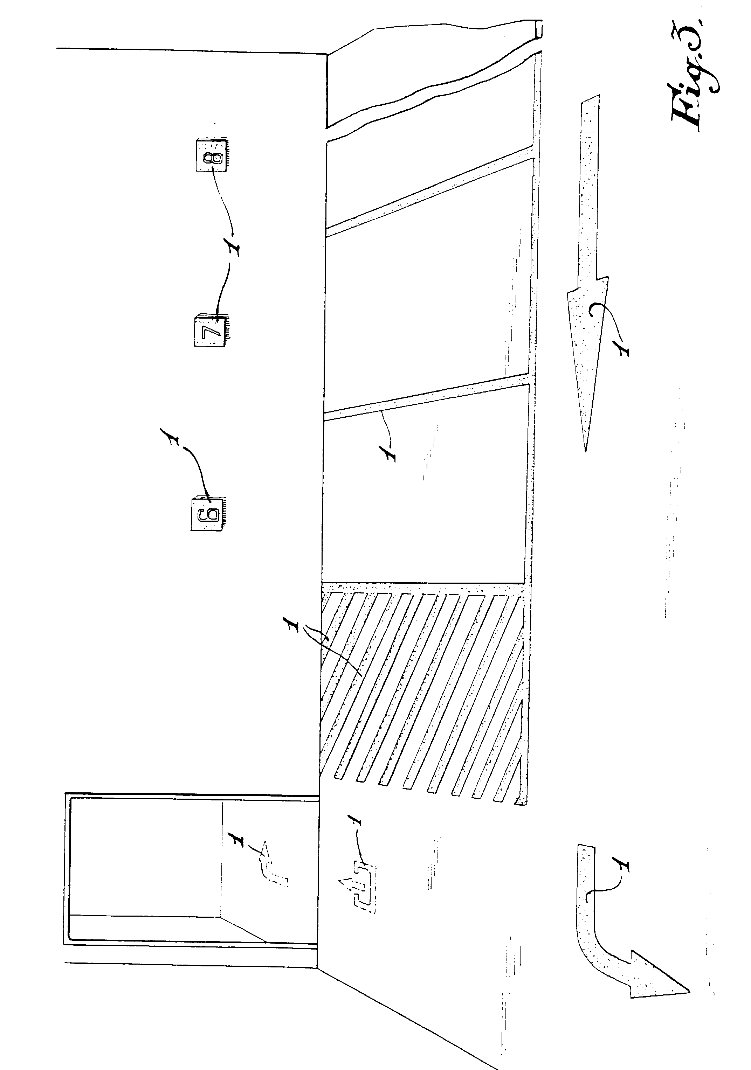

Comme illustré à la Fig. 3, le dispositif 1 suivant l'invention peut être utilisé dans un parking afin de délimiter les zones d'emplacement des voitures. Ainsi, le soir, les différents emplacements sont clairement mis en évidence, lorsque les LED sont mises sous tension.

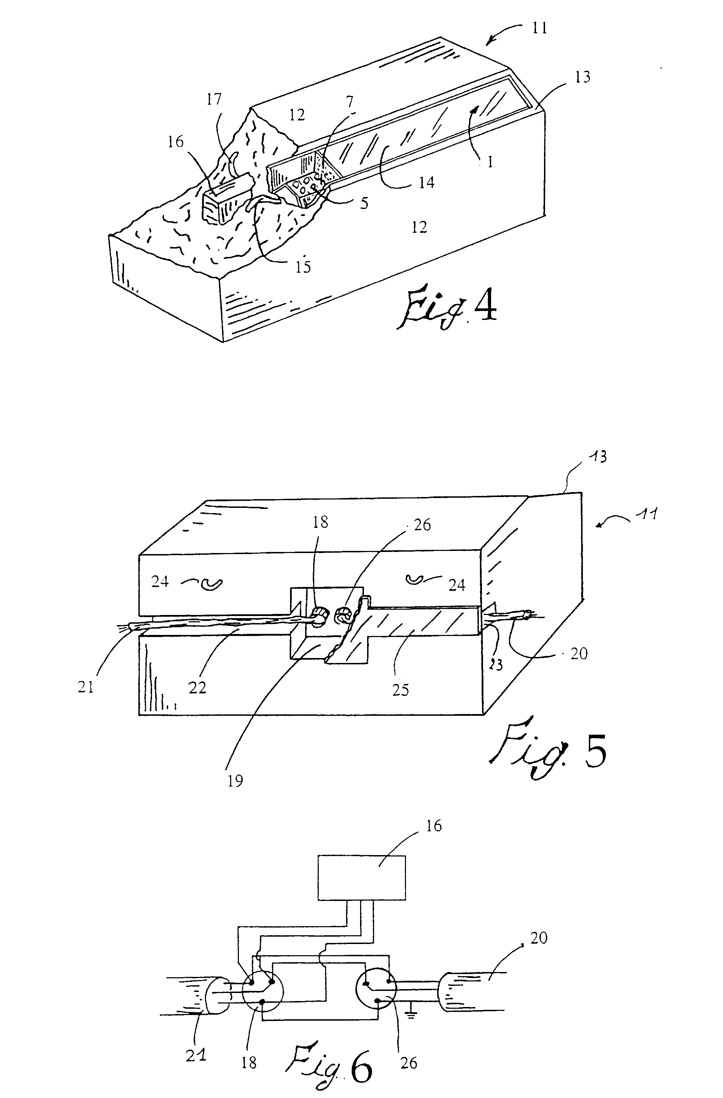

Les figures 4 et 5 illustrent une autre application du dispositif lumineux décrit ci-dessus pour la réalisation de bordures de chaussée lumineuses (11).

La bordure 11 est un bloc en béton 12 de forme rectangulaire dont une arête est coupée en biseau 13. Dans cette arête biseautée 13, est placé un dispositif lumineux 1 comportant au moins une diode électroluminescente (LED) 5 et un matériau translucide 7 solide enrobant la ou les diodes 5. Le dispositif lumineux peut être recouvert d'une plaque de protection transparente 14. Du dispositif lumineux 1 part un câble électrique 15 noyé dans le béton 12 qui est raccordé au boîtier électronique 16. Du boîtier 16 part un câble 17 relié à un connecteur 18 fixé dans une cavité 19 ménagée dans le béton 12. Des câbles électriques 20, 21 sont logés dans des rainures 22, 23 ménagées dans la face arrière de la bordure 11 de part et d'autre de la cavité 19. Des câbles 20, 21 relient deux bordures 11 entre elles. Deux crochets de levage sont représentés en 24. Un cache 25 permet de masquer les rainures 22, 23, la cavité 19 et le câblage 20, 21.

Les connecteurs 18, 26 représentés à la fig. 6 sont composés de 3 points de raccordement. Deux pour le 220V et un pour la mise à la terre. L'alimentation de la bordure 11 se fait par le câble 21 relié au connecteur 18 qui est relié au boîtier électronique 16. Le connecteur 26 est relié au connecteur 18 de sorte que le câble 20 puisse alimenter la bordure 11 suivante.

La préparation d'une bordure 11 suivant l'invention nécessite les étapes suivantes :
- préparer un dispositif lumineux 1 en forme de barre comme décrit plus haut.
- raccorder le boîtier électronique 16 à la barre lumineuse 1 et au connecteur 18. Il faut veiller à bien isoler les connections électriques.
- tester si l'ensemble barre lumineuse 1, boîtier électronique 16 et connecteur 18 fonctionnent correctement.
- raccorder le connecteur 18 au connecteur 26.
- fixer les connecteurs 18, 26 sur une tôle fixée sur un bloc de mousse expansée solide, genre polystyrène, ayant la forme de la cavité 19.
- préparer deux bandes de mousse expansée solide ayant la forme des rainures 22, 23.
- préparer un moule destiné à recevoir le béton dont la forme est celle de la bordure 11.
- sur l'arête biseautée du moule fixer solidement la barre lumineuse 1 afin d'éviter qu'elle ne puisse bouger lors de la coulée du béton 12.
- couler le béton 12 en évitant que les connecteurs 18, 26 et le bloc de mousse expansée solide ayant la forme de la cavité 19 ne soient noyés complètement.
- poser doucement le bloc de mousse expansée ayant la forme de la cavité 19 sur le béton en l'enfonçant jusqu'à ce que le béton 12 affleure le bloc de mousse.
- poser doucement les bandes de mousse expansée ayant la forme des rainures 22, 23 jusqu'à ce que le béton 12 affleure les bords des bandes.
- une fois le béton durci, démoulez la bordure 11 en la transportant sur une palette de rangement en utilisant les crochets de levage 24.
- Après avoir enlevé le bloc de mousse expansée solide tester le bon fonctionnement de l'ensemble.

L'intérêt de l'emploi de ce dispositif lumineux à LED est d'obtenir une bordure telle que tout ce qu'elle contient soit figé dans la masse de sorte que l'on obtient un ensemble monobloc.

Cette invention permet de simplifier la conception des moules dans la mesure où il n'est plus nécessaire de prévoir des cavités importantes destinées à recevoir l'appareillage électrique et la fenêtre; la coulée et le démoulage de la bordure en sont facilités. Un gain sensible en temps peut en résulter.

Les LED étant protégées dans de la résine, le dispositif lumineux peut subir des chocs sans dommages, il est rendu insensible aux vibration engendrées par la circulation routière. Cette invention permet d'installer les dispositifs lumineux dans des bordures placées en des endroits présentant un risque de passage fréquent de véhicules.

La durée de vie importante des LED permet de réaliser une bordure sans entretien, ni remplacement régulier. Le personnel d'entretien des voiries sera moins sollicité. Etant, dès lors, moins présent sur la voirie, cette invention permet de réduire la probabilité d'accident au personnel.

Les LED étant protégées dans de la résine et étant placées dans une bordure monobloc, cette invention permet le nettoyage de la surface lumineuse au moyen, par exemple, d'une balayeuse équipée de jets d'eau sous pression.

Exécuté sous cette forme, cette invention permet d'isoler l'équipement électrique ou électronique des agents corrodants provenant, entre autres, des gaz d'échappement des véhicules et des sels répandus par temps de gel.

De nombreuses autres applications peuvent être envisagées pour le dispositif lumineux 1 suivant l'invention.

Le présent dispositif peut par exemple être utilisé pour la fabrication de dalles à motifs lumineux, par exemple des dalles de jardin. Ainsi, un chemin peut être rendu lumineux dans un parc ou jardin.

Le présent dispositif peut encore être utilisé pour la réalisation de mosaïques décoratives lumineuses, pour la réalisation d'enseignes publicitaires lumineuses particulièrement résistantes aux contraintes mécaniques. Le présent dispositif peut également être utilisé pour la réalisation d'une signalisation indiquant les sorties de secours. La résistance du présent dispositif aux chocs ainsi qu'aux poids des passants permet le placement de cette signalisation au sol ou au bas des murs. Ceci est particulièrement avantageux en cas d'incendie, car les fumées ayant tendance à s'accumuler en hauteur, cette signalisation placée au sol reste bien visible.

La présente invention permet également la réalisation de signalisations lumineuses alimentées par batteries et possédant une durée d'illumination particulièrement longue.

Suivant une forme particulière de réalisation de l'invention, une matière phosphorescente est mélangée dans la masse translucide du dispositif. On peut alors prévoir une alimentation des LED, par exemple par batterie, par intermittence, les LED étant mises sous tension pendant un temps juste suffisant pour exciter la matière phosphorescente. Lorsque les LED ne sont plus sous tension, la matière phosphorescente continue à émettre de la lumière, ce qui procure une luminosité suffisante au dispositif pour permettre de continuer à le localiser. Les LED sont programmées de telle manière que la durée des périodes de non-alimentation des LED corresponde à la période durant laquelle la luminosité conférée par la phosphorescence reste à un niveau suffisant. La phosphorescence est régulièrement ré-excitée par remise sous tension périodique des LED.

Un tel dispositif a l'avantage d'être largement indépendant de l'alimentation électrique par réseau et de posséder une autonomie de luminosité bien supérieure à celle d'un dispositif classique alimenté par batterie, tout en conservant les avantages de résistance aux contraintes mécaniques et à l'humidité. Ce dispositif peut, avantageusement être utilisé pour l'indication des issues de secours, par exemple dans les galeries souterraines de métro, et peut bien entendu être utilisé pour toute autre application imaginable.

## Revendications

1. Dispositif lumineux (1) comportant au moins une diode électroluminescente (LED) (5), noyée, au moins partiellement, dans un matériau translucide solide, ce matériau enrobant au moins la partie supérieure de la ou des diodes (5), caractérisé en ce que ledit matériau translucide comporte un élément de cohésion (7) et des particules solides (8) ayant des dimensions comprises entre 1 mm et 16 mm, aptes à diffracter la lumière.

2. Dispositif lumineux (1) suivant la revendication 1, caractérisé en ce qu'il comporte plusieurs diodes électroluminescentes (5) interconnectées entre elles de façon à pouvoir être reliées à un circuit d'alimentation électrique.

3. Dispositif lumineux (1) suivant l'une quelconque des revendications précédentes, caractérisé en ce que l'élément de cohésion (7) comporte une résine.

4. Dispositif lumineux (1) suivant l'une quelconque des revendications précédentes, caractérisé en ce que les particules (8) sont des billes de verre.

5. Dispositif lumineux (1) suivant l'une quelconque des revendications précédentes, caractérisé en ce que les particules (8) ont des dimensions comprises entre 30 et 160 % de celles des diodes (5).

6. Dispositif lumineux (1) suivant l'une quelconque des revendications précédentes, caractérisé en ce que le matériau translucide comporte, en outre, une matière colorante.

7. Dispositif lumineux (1) suivant l'une quelconque des revendications précédentes, caractérisé en ce qu'il est apte à être encastré de manière telle qu'une des faces du matériau translucide solide soit affleurante.

8. Utilisation du dispositif lumineux (1) suivant l'une quelconque des revendications précédentes, pour le marquage routier.

9. Elément de construction pour voie de circulation routière, caractérisé en ce qu'il comporte un dispositif lumineux suivant l'une quelconque des revendications 1 à 7.

10. Elément suivant la revendication 9, caractérisé en ce qu'il constitue un élément de bordure de chaussée (11).

11. Elément suivant l'une quelconque des revendications 9 et 10, caractérisé en ce que l'électronique associée au fonctionnement du dispositif lumineux (1) est noyée dans l'élément lui-même.

12. Elément suivant l'une quelconque des revendications 9 à 11, caractérisé en ce qu'il comporte une cavité (19) par laquelle les câbles électriques (20, 21) sont aptes à sortir.

13. Elément suivant l'une quelconque des revendications 9 à 12, caractérisé en ce que la sortie de câble est remplacée par un ou plusieurs connecteurs (18, 26) encastrés.

14. Elément suivant l'une quelconque des revendications 9 à 13, caractérisé en ce qu'une rainure (22, 23) est ménagée dans l'élément, de sorte que les câbles électriques puissent y être logés.

15. Elément suivant l'une quelconque des revendications 9 à 14, caractérisé en ce que la longueur des câbles électriques (20, 21) est telle que les câbles (20, 21) sont aptes à être logés dans les rainures (22, 23) et aptes à être reliés aux câbles électriques des éléments voisins.

## Patentansprüche

1. Leuchtvorrichtung (1) mit zumindest einer lichtemittierenden Diode (LED) (5), die zumindest teilweise in ein durchscheinendes Festmaterial eingebettet ist, wobei dieses Material zumindest den oberen Bereich der Diode oder Dioden (5) umgibt, dadurch gekennzeichnet, daß das durchscheinende Material ein Haftmittel (7) und Festpartikel (8) mit Abmessungen zwischen 1 mm und 16 mm umfaßt, die geeignet sind, das Licht zu brechen.

2. Leuchtvorrichtung (1) nach Anspruch 1, dadurch gekennzeichnet, daß sie mehrere untereinander verbundene lichtemittierende Dioden (5) umfaßt, derart, daß sie an einen Versorgungsstromkreis angeschlossen werden können.

3. Leuchtvorrichtung (1) nach einem der vorhergehenden Ansprüche, dadurch gekennzeichnet, daß das Haftmittel (7) ein Harz umfaßt.

4. Leuchtvorrichtung (1) nach einem der vorhergehenden Ansprüche, dadurch gekennzeichnet, daß die Partikel (8) Glaskugeln sind.

5. Leuchtvorrichtung (1) nach einem der vorhergehenden Ansprüche, dadurch gekennzeichnet, daß die Partikel (8) Abmessungen zwischen 30 und 160% derjenigen der Dioden (5) aufweisen.

6. Leuchtvorrichtung (1) nach einem der vorhergehenden Ansprüche, dadurch gekennzeichnet, daß das durchscheinende Material außerdem einen Farbstoff umfaßt.

7. Leuchtvorrichtung (1) nach einem der vorhergehenden Ansprüche, dadurch gekennzeichnet, daß sie derart einbaubar ist, daß eine der Flächen des durchscheinenden Festmaterials bündig eingelassen ist.

8. Verwendung der Leuchtvorrichtung (1) nach einem der vorhergehenden Ansprüche zur Straßenmarkierung.

9. Bauelement für Straßenverkehrsstrecken, dadurch gekennzeichnet, daß es eine Leuchtvorrichtung nach einem der Ansprüche 1 bis 7 umfaßt.

10. Element nach Anspruch 9, dadurch gekennzeichnet, daß es ein Straßenrandelement (11) bildet.

11. Element nach einem der Ansprüche 9 und 10, dadurch gekennzeichnet, daß die zum Betrieb der Leuchtvorrichtung (1) gehörende Elektronik in das Element selbst eingebettet ist.

12. Element nach einem der Ansprüche 9 bis 11, dadurch gekennzeichnet, daß es einen Hohlraum (19) umfaßt, durch den die Elektrokabel (20,21) herausführbar sind.

13. Element nach einem der Ansprüche 9 bis 12, dadurch gekennzeichnet, daß der Kabelausgang durch einen oder mehrere eingelassene Verbinder (18,26) ersetzt ist.

14. Element nach einem der Ansprüche 9 bis 13, dadurch gekennzeichnet, daß eine Rinne (22,23) in das Element eingearbeitet ist, so, daß dort die Elektrokabel untergebracht werden können.

15. Element nach einem der Ansprüche 9 bis 14, dadurch gekennzeichnet, daß die Länge der Elektrokabel (20,21) derart bemessen ist, daß die Kabel (20,21) in den Rinnen (20,23) unterbringbar und an Elektrokabel benachbarter Elemente anschließbar sind.

## Claims

1. Luminous device (1) comprising at least one light-emitting diode (LED) (5) embedded at least partially in a solid translucent material, this material encasing at least the upper part of the diode or diodes (5), characterized in that the said translucent material comprises a cohesive element (7) and solid particles (8) having dimensions of between 1 mm and 16 mm and capable of diffracting light.

2. Luminous device (1) according to Claim 1, characterized in that it comprises a plurality of light-emitting diodes (5) interconnected with one another so as to be capable of being connected to an electrical supply circuit.

3. Luminous device (1) according to either one of the preceding claims, characterized in that the cohesive element (7) comprises a resin.

4. Luminous device (1) according to any one of the preceding claims, characterized in that the particles (8) are glass balls.

5. Luminous device (1) according to any one of the preceding claims, characterized in that the particles (8) have dimensions of between 30 and 160% of those of the diodes (5).

6. Luminous device (1) according to any one of the preceding claims, characterized in that the translucent material comprises, furthermore, a colouring substance.

7. Luminous device (1) according to any one of the preceding claims, characterized in that it is capable of being fitted in in such a way that one of the faces of the solid translucent material is flush.

8. Use of the luminous device (1) according to any one of the preceding claims for road marking.

9. Construction element for a road traffic lane, characterized in that it comprises a luminous device according to any one of Claims 1 to 7.

10. Element according to Claim 9, characterized in that it forms a road kerb element (11).

11. Element according to either one of Claims 9 and 10, characterized in that the electronics associated with the operation of the luminous device (1) are embedded in the element itself.

12. Element according to any one of Claims 9 to 11, characterized in that it comprises a cavity (19), via which the electrical cables (20, 21) are capable of emerging.

13. Element according to any one of Claims 9 to 12, characterized in that the cable outlet is replaced by one or more fitted-in connectors (18, 26).

14. Element according to any one of Claims 9 to 13, characterized in that a groove (22, 23) is made in the element, so that the electrical cables can be accommodated therein.

15. Element according to any one of Claims 9 to 14, characterized in that the length of the electrical cables (20, 21) is such that the cables (20, 21) are capable of being accommodated in the grooves (22, 23) and of being connected to the electrical cables of the adjacent elements.
